Europäisches Patentamt

European Patent Office

Office européen des brevets

(11) Veröffentlichungsnummer: **0 566 930 A1**

# (12) EUROPÄISCHE PATENTANMELDUNG

(21) Anmeldenummer: **93105738.4**

(22) Anmeldetag: **07.04.93**

(51) Int. Cl.5: **D06M 15/263**, D06M 15/285, D06M 15/327, D06M 15/233

(30) Priorität: **24.04.92 DE 4213514**

(43) Veröffentlichungstag der Anmeldung:
**27.10.93 Patentblatt 93/43**

(84) Benannte Vertragsstaaten:
**BE DE ES FR GB IT NL**

(71) Anmelder: **BASF Aktiengesellschaft
Carl-Bosch-Strasse 38
D-67063 Ludwigshafen(DE)**

(72) Erfinder: **Niessner, Manfred, Dr.
Gotenstrasse 25
W-6707 Schifferstadt(DE)**
Erfinder: **Voelker, Dieter
Pfalzring 184
W-6704 Mutterstadt(DE)**
Erfinder: **Schoepke, Holger, Dr.
Bannholzweg 49
W-6903 Neckargemuend(DE)**
Erfinder: **Leitner, Heinz
Im Steg 64
W-6802 Ladenburg(DE)**
Erfinder: **Messmer, Karlheinz, Dr.
Sudetenstrasse 37
W-8950 Kaufbeuren(DE)**
Erfinder: **Hartmann, Juergen, Dr.
Bruesseler Ring 47
W-6700 Ludwigshafen(DE)**

(54) **Verwendung von wasserlöslichen oder wasserdispergierbaren Suspensionspolymerisaten als Textilfaserschlichtemittel.**

(57) Die Erfindung betrifft die Verwendung von Suspensionspolymerisaten aus

a) 40 bis 90 Gew.-% Acrylsäure- und/oder Methacrylsäureestern,

b) 10 bis 35 Gew.-% monoethylenisch ungesättigten $C_3$- bis $C_5$-Carbonsäuren, Halbestern von Maleinsäure, Fumarsäure oder Itaconsäure mit einwertigen $C_1$- bis $C_4$-Alkoholen oder Mischungen der genannten Monomeren mit bis zu 55 Gew.-% anderen wasserlöslichen Monomeren und

c) 0 bis 30 Gew.-% anderen wasserunlöslichen Monomeren

in wäßriger Lösung oder Dispersion in zumindest partiell mit Basen neutralisierter Form als Schlichtemittel für Textilfasern.

EP 0 566 930 A1

Die Erfindung betrifft die Verwendung von wasserlöslichen oder wasserdispergierbaren Suspensionspolymerisaten, die Acrylsäure- und/oder Methacrylsäureester sowie monoethylenisch ungesättigte Carbonsäuren einpolymerisiert enthalten, als Schlichtemittel für Textilfasern.

Aus der US-A-3 740 367 ist bekannt, wäßrige kolloidale Dispersionen von Polymerpartikeln mit 95 % der Teilchen unter 0,1 $\mu$m und einer mittleren Molmasse von mehr als 10 000 g/mol als Schlichtemittel für Textilfasern zu verwenden. Die Copolymerisate enthalten immer Methylmethacrylat und monoethylenisch ungesättigte Carbonsäuren einpolymerisiert. Der Gehalt an einpolymerisierten monoethylenisch ungesättigten Carbonsäuren beträgt 1 bis 8 Gew.-%. Die Copolymerisate werden nach dem Verfahren der Suspensions- oder der Emulsionspolymerisation hergestellt. Aufgrund der geringen Menge an einpolymerisierten Carbonsäuren müssen bei der Herstellung gebrauchsfertiger Schlichtemittellösungen bestimmte kritische Verfahrensbedingungen eingehalten werden. Das Copolymerisat muß dabei zunächst in Wasser verteilt werden, dann fügt man Ammoniak hinzu und rührt die Mischung kräftig solange in dem Temperaturbereich von 40 bis 100°C, bis die Copolymerisate die oben angegebene Teilchengröße aufweisen. In einigen Fällen ist es außerdem noch erforderlich, weitere Hilfsmittel, wie wasserlösliche Alkohole, Aceton oder Dioxan bei der Herstellung der Schlichtemittellösungen mitzuverwenden. Dadurch werden aber die Schlichteeffekte beeinträchtigt, weil die in den Schlichtemittelflotten enthaltenen Lösemittel dazu führen, daß die Polymerfilme quellen. Darüber hinaus werden leichtflüchtige Lösemittel bei der Anwendung der Schlichtemittel freigesetzt, dies ist aus ökologischen und toxikologischen Gründen nicht akzeptabel.

Wie in dieser Literaturstelle außerdem angegeben ist, sind Copolymerisate, die mehr als 8 Gew.-% einer monoethylenisch ungesättigten Carbonsäure einpolymerisiert enthalten, zu feuchtigkeitsempfindlich und nur für kurzfristige Beschichtungen geeignet. Filme aus diesen Copolymerisaten haben außerdem eine zu hohe Brüchigkeit und geringe Flexibilität. Da sich Schlichtefilme aber allen Biege-, Knick- und Scheuerbeanspruchungen des Garns während des Webvorgangs anpassen müssen, sind aufgrund der Lehre dieser Literaturstelle solche Copolymerisate nicht als Schlichtemittel geeignet, die 8 bis 25 Gew.-% einer monoethylenisch ungesättigten Carbonsäure einpolymerisiert enthalten und in Form der Ammoniumsalze vorliegen.

Aus der EP-A-0 450 437 ist die Verwendung von Pfropfcopolymerisaten, die durch Emulsions- oder Lösungspolymerisation von Monomermischungen aus

a) 50 bis 95 Gew.-% eines $C_1$- bis $C_8$-Alkylacrylats und/oder eines $C_1$- bis $C_8$-Alkylmethacrylats,

b) 5 bis 20 Gew.-% einer zu monoethylenisch ungesättigten Carbonsäure,

und gegebenenfalls anderen Monomeren in Gegenwart von 2 bis 60 Gew.-Teilen Polyvinylalkohol pro 100 Gew.-Teile der Monomeren erhältlich sind, als Schlichtemittel für Stapelfaser- und Filamentgarne bekannt. Diese Schlichtemittel haben den Nachteil, daß sie in teilneutralisierter oder neutralisierter Form in Lösungen bzw. Dispersionen mit Feststoffgehalten von 18 bis 25 Gew.-% vorliegen. Pulverförmige Schlichtemittel, die Vorteile bei Lagerung, Transport und Anwendung gegenüber Lösungen und Dispersionen zeigen, sind daraus nur durch technisch aufwendige und kostenintensive Trocknungsverfahren zugänglich.

Der Erfindung liegt die Aufgabe zugrunde, in Pulverform vorliegende Copolymerisate als Schlichtemittel zur Verfügung zu stellen.

Die Aufgabe wird erfindungsgemäß gelöst durch die Verwendung von Suspensionspolymerisaten aus

a) 40 bis 90 Gew.-% Acrylsäure- und/oder Methacrylsäureestern,

b) 10 bis 35 Gew.-% monoethylenisch ungesättigten $C_3$- bis $C_5$-Carbonsäuren, Halbestern von Maleinsäure, Fumarsäure oder Itaconsäure mit einwertigen $C_1$- bis $C_4$-Alkoholen oder Mischungen dieser Monomeren mit bis zu 55 Gew.-% anderen wasserlöslichen Monomeren und

c) 0 bis 30 Gew.-% anderen wasserunlöslichen Monomeren

in wäßriger Lösung oder Dispersion in zumindest partiell mit Alkalimetall- und/oder Erdalkalimetallbasen neutralisierter Form als Schlichtemittel für Textilfasern. Zur Herstellung der Schlichteflotten mischt man vorzugsweise pulverförmige Suspensionspolymerisate mit pulverförmigen Alkalimetall- und/oder Erdalkalimetallbasen und löst oder dispergiert die Mischung anschließend in Wasser. Die Schlichteflotten können auch dadurch hergestellt werden, daß man pulverförmige Suspensionspolymerisate in Wasser einträgt und durch Zusatz von Alkalimetall- und/oder Erdalkalimetallbasen oder Ammoniumbasen zumindest partiell neutralisiert.

Die Suspensionspolymerisate enthalten als Monomer der Gruppe a) 40 bis 90, vorzugsweise 60 bis 85 Gew.-% Acrylsäure- und/oder Methacrylsäureester einpolymerisiert. Diese Ester leiten sich von einwertigen Alkoholen von 1 bis 22 Kohlenastoffatomen ab. Beispiele für solche Monomere sind Methylacrylat, Ethylacrylat, n-Propylacrylat, Isopropylacrylat, n-Butylacrylat, Isobutylacrylat, tert.-Butylacrylat, Hexylacrylat, Cyclohexylacrylat, 2-Ethylhexylacrylat, Laurylacrylat, Stearylacrylat, Benzylacrylat, 2-Phenylethylacrylat, 2-Cyanoethylacrylat, Methylmethacrylat, Ethylmethacrylat, n-Propylmethacrylat, Isopropylmethacrylat, n-Butylmethacrylat, Isobutylmethacrylat, tert.-Butylmethacrylat, Hexylmethacrylat, Cyclohexylmethacrylat, 4-tert.-

2

Butylcyclohexylmethacrylat und 3-Cyclohexylpropyl-1-methacrylat, Ethylhexylmethacrylat, Laurylmethacrylat, Stearylmethacrylat, Benzylmethacrylat und 2-Cyanoethylmethacrylat.

Vorzugsweise werden als Monomere der Gruppe a) Methylacrylat, Ethylacrylat, n-Propylacrylat, Isopropylacrylat, n-Butylacrylat, Isobutylacrylat, tert.-Butylacrylat, 2-Ethylhexylacrylat, Laurylacrylat, Methylmethacrylat, Ethylmethacrylat, n-Propylmethacrylat, Iso-propylmethacrylat, n-Butylmethacrylat und Isobutylmethacrylat eingesetzt.

Von besonderer Bedeutung sind hierbei Methylacrylat, Ethylacrylat, n-Butylacrylat, tert.-Butylacrylat, 2-Ethylhexylacrylat und Methylmethacrylat. Diese Gruppe von Monomeren ist in Wasser unlöslich.

Als Monomere der Gruppe b) kommen monoethylenisch ungesättigte $C_3$-$C_5$-Carbonsäuren, Halbester von Maleinsäure, Fumarsäure oder Itaconsäure mit einwertigen $C_1$-$C_4$-Alkoholen oder Mischungen der genannten Monomere mit bis zu 55 Gew.-% anderen wasserlöslichen Monomeren in Betracht. Die Monomeren der Gruppe b) sind in der Monomermischung zu 10 bis 35, vorzugsweise 15 bis 30 Gew.-% enthalten. Die Monomeren dieser Gruppe sind wasserlöslich. Einzelne Verbindungen dieser Art sind beispielsweise Acrylsäure, Methacrylsäure, Crotonsäure, Itaconsäure, Maleinsäure, Fumarsäure sowie die Halbester von Maleinsäure, Fumarsäure oder Itaconsäure mit einwertigen $C_1$-$C_4$-Alkoholen, z.B. Maleinsäuremonomethylester, Maleinsäuremonoethylester, Maleinsäure-mono-n-propylester, Maleinsäuremono-isopropylester und Maleinsäuremono-n-butylester. Diese Monomeren können in Mischung mit anderen wasserlöslichen Monomeren bei der Copolymerisation eingesetzt werden. Die anderen wasserlöslichen Monomeren sind dabei in Mengen von 0 bis 55 Gew.-% in der Mischung anwesend. Bei diesen anderen wasserlöslichen monoethylenisch ungesättigten Monomeren handelt es sich beispielsweise um die primären Amide sowie um die Amino- oder Hydroxylgruppen tragenden Amide und Ester von monoethylenisch ungesättigten $C_3$- bis $C_5$-Carbonsäuren. Beispiele für diese Verbindungen sind Acrylamid, Methacrylamid, Crotonsäureamid, Diethylaminoethylacrylat, Dimethylaminoethylacrylat, Dimethylaminopropylacrylat, Dimethylaminoneopentylacrylat, Dimethylaminoethylmethacrylat, Dimethylaminopropylmethacrylat, Dimethylaminoethylacrylamid, Dimethylaminopropylacrylamid und Dimethylaminopropylmethacrylamid. Die Aminogruppen tragenden Monomeren werden vorzugsweise bei pH-Werten von unterhalb 7 bei der Copolymerisation eingesetzt. Sie liegen üblicherweise in Form der Salze mit Säuren oder in quaternierter Form vor. Für die Salzbildung können sämtliche starken Säuren, z.B. Schwefelsäure, Salzsäure und Phosphorsäure, Sulfonsäuren, Phosphonsäuren oder Carbonsäuren wie Ameisensäure oder Essigsäure eingesetzt werden. Weitere wasserlösliche Monomere sind N-Vinylpyrrolidon, N-Vinylformamid, N-Vinylacetamid, Acrylamidopropansulfonsäure, Vinylsulfonsäure und Vinylphosphonsäure. Andere wasserlösliche Monomere der Gruppe b) sind beispielsweise Hydroxyethylacrylat, Hydroxypropylacrylat, Butandiolmonoacrylat, Ethyldiglykolacrylat, Hydroxyethylmethacrylat, Ethyltriglykolmethacrylat, N-Vinylcaprolactam und 1-Vinylimidazol.

Bevorzugt eingesetzte Monomere der Gruppe b) sind Acrylsäure, Methacrylsäure, Maleinsäure und Itaconsäure.

Die Suspensionspolymerisate können gegebenenfalls durch c) Mitverwendung von anderen wasserunlöslichen Monomeren als den Monomeren der Gruppe a) modifiziert werden. Geeignete andere nicht wasserlösliche Monomere der Gruppe c) sind beispielsweise Acrylnitril, Methacrylnitril, Vinylacetat, Vinylpropionat, Vinylisobutylether, Styrol und α-Methylstyrol. Bevorzugte Comonomere der Gruppe c) sind Acrylnitril, Vinylacetat, Vinylpropionat und Styrol. Bei der Herstellung der Suspensionspolymerisate kann man entweder nur ein Monomer der Gruppe a) mit einem Monomer der Gruppe b) und gegebenenfalls der Gruppe c) copolymerisieren oder man kann auch ein Gemisch aus 2 oder mehreren Monomeren der Gruppe a) mit einem oder mit mehreren Monomeren der Gruppe b) und gegebenenfalls mit einem oder mehreren Monomeren der Gruppe c) copolymerisieren. Die Monomeren der Gruppe c) sind bis zu 30 Gew.-% am Aufbau der Suspensionspolymerisate beteiligt. Sofern sie zur Modifizierung der Suspensionspolymerisate eingesetzt werden, beträgt ihr Anteil am Aufbau dieser Polymerisate vorzugsweise 0 bis 15 Gew.-%. Bevorzugt eingesetzte Monomere der Gruppe c) sind Acrylnitril, Vinylacetat, Vinylpropionat und Styrol.

Zur Herstellung der Copolymerisate werden die Monomeren unter Rühren in einer wäßrigen Phase verteilt. Bezogen auf 100 Gew.-Teile Wasser verwendet man üblicherweise 10 bis 65 Gew.-Teile der Monomeren. Um während der Polymerisation die Koagulation der Mischung durch Verkleben der einzelnen polymerisierenden Monomertröpfchen zu vermeiden, arbeitet man in aller Regel in Gegenwart eines Schutzkolloids. Hierfür eignen sich alle zur Perlpolymerisation beschriebenen Schutzkolloide und Dispergatoren. Schutzkolloide und Dispergatoren können gegebenenfalls in Kombination mit Tensiden angewendet werden. Hochmolekulare Dispergatoren sind beispielsweise modifizierte natürliche Polymere und synthetische Homo-, Co- und Pfropfpolymerisate. Geeignete Schutzkolloide bzw. Dispergatoren sind Methylcellulose, Hydroxyethylcellulose, Hydroxypropylcellulose, Carboxymethylcellulose, Methylcellulose, Mischether wie beispielsweise Methylhydroxyethylcellulose oder Carboxymethylmethylcellulose sowie Polyvinylalkohol, teilverseiftes Polyvinylacetat, Polyacrylsäure, Polymethacrylsäure, Alkalimetall-, insbesondere Natrium-Salze

3

der genannten Polycarbonsäuren sowie Polyvinylpyrrolidon. Das Molekulargewicht der als Schutzkolloide in Betracht kommenden synthetischen Polymeren beträgt 20.000 bis 500.000 g/Mol.

Besonders bevorzugt ist der Einsatz von Methylcellulose, Hydroxyethylcellulose, Methylhydroxyethylcellulose, Methylhydroxypropylcellulose, Polyacrylsäure und von Polyvinylalkoholen, die noch unterschiedliche Mengen Vinylacetateinheiten einpolymerisiert enthalten, sowie von Polyvinylpyrrolidon. Die Teilchengröße der Suspensionspolymerisate kann beispielsweise mit Hilfe der hochmolekularen Dispergatoren dadurch gesteuert werden, daß man noch zusätzlich Tenside verwendet. In Abhängigkeit von den Rührbedingungen bei der Polymerisation, der Monomerzusammensetzung, dem Volumenverhältnis von Monomeren zu Wasser und dem Zusatz an Tensiden kann die gewünschte Teilchengröße der Suspensionspolymerisate durch Änderung der Schutzkolloidmenge in weiten Grenzen variiert werden. Üblicherweise werden die Schutzkolloide bzw. Dispergatoren in Mengen von 0,1 bis 10 Gew.-%, bezogen auf die eingesetzten Monomeren, verwendet.

Für die Suspensionspolymerisation sind alle üblichen radikalbildenen Polymerisationsinitiatoren, bevorzugt wenig oder nicht wasserlösliche Polymerisationsinitiatoren geeignet. Dies sind beispielsweise 2,2'-Azobisisobutyronitril, 2,2'-Azobis(2,4-dimethylvaleronitril), 4,4'Azobis(4-cyanovaleriansäure), Dimethyl-2,2'-azobis(2-methylpropionat), 2,2'-Azobis(4-methoxy-2,4-dimethylvaleronitril), 2,2'-Azobis(2-methylbutyronitril), 1,1'Azobis(cyclohexan-1-carbonitril) und 1-[(1-Cyano-1-methylethyl)azo]formamid sowie Acetyl-cyclohexansulfonyl-peroxid, Diisononanoylperoxid, Didecanoylperoxid, Dilauroylperoxid, Dibenzoylperoxid, Di-2-ethyl-hexylperoxidicarbonat, Dicyclohexylperoxidicarbonat, Bis(4-t-butylcyclohexyl)peroxidicarbonat, Dimyristylperoxidicarbonat, Dicetylperoxidicarbonat, t-Butylperneodecanoat, t-Amylperpivalat, t-Butylperpivalat, t-Butylper-2-ethylhexanoat, t-Butylperbenzoat und Di-t-butylperoxid.

Besonders geeignet sind Polymerisationsinitiatoren mit einer Halbwertszeit des thermischen Zerfalls von 10 Stunden im Bereich von 40°C bis 110°C wie beispielsweise t-Butylperpivalat, t-Butylper-2-ethylhexanoat, t-Butylperbenzoat, 2,24-Azobisisobutyronitril, 2,2'-Azobis(2,4-dimethylvaleronitril) und 2,2'-Azobis(2-methylbutyronitiril). Die Auswahl der Initiatoren richtet sich in erster Linie nach der einzustellenden Polymerisationstemperatur.

Man kann entweder einen einzigen Initiator oder Mischungen mehrerer Initiatoren verwenden. Insbesondere bei den Peroxidgruppen tragenden Initiatoren ist neben der rein thermischen Zersetzung die Spaltung durch Zugabe von Reduktionsmitteln möglich. Dies können Schwermetallsalze, z.B. Kupfer-, Cobalt-, Mangan-, Eisen-, Nickel- und Chromsalze und/oder organische Verbindungen, wie Benzoin, Dimethylanilin, Ascorbinsäure sowie Reduktionsmittel wie beispielsweise Natriumsulfit, Natriumbisulfit, Natriumformaldehydsulfoxylat oder Hydrazin sein. Solche Mischungen von Polymerisationsinitiatoren mit Reduktionsmitteln ermöglichen die Polymerisation bei Temperaturen, die deutlich unter der Zerfallstemperatur der Initiatoren liegt. Bezogen auf die bei der Polymerisation eingesetzten Monomeren benötigt man 100 bis 50.000 ppm, vorzugsweise 1000 bis 20.000 ppm eines Polymerisationsinitiators oder einer Mischung mehrerer Polymerisationsinitiatoren. Die angegebenen Initiatormengen entsprechen etwa 0,003 bis 2,0 mol-% Initiator, bezogen auf die eingesetzten Monomere.

Das Molekulargewicht der Suspensionspolymerisate kann gegebenenfalls durch Mitverwendung von Reglern bei der Polymerisation eingestellt werden. Zur Regulierung des Molekulargewichts können alle üblichen Regler eingesetzt werden, unabhängig davon, ob sie in Wasser oder in der Monomermischung löslich sind. Geeignet sind beispielsweise Mercaptane wie Mercaptoethanol, Mercaptopropanol, Mercaptobutanol, Mercaptoessigsäure, Mercaptopropionsäire, Butylmercaptan und Dodecylmercaptan. Als Regler eignen sich außerdem Allylverbindungen wie Allylalkohol und Butenole, Aldehyde wie Formaldehyd, Acetaldehyd, Propionaldehyd, n-Butyraldehyd, und iso-Butylaldehyd, Ameisensäure, Ammoniumformiat, Propionsäure und Hydroxylammoniumsulfat. Diese Regler können in Mengen von 0,05 bis 20 mol-% bezogen auf die Monomeren zugesetzt werden. Eine weitere wichtige Gruppe sind die regelnden Lösungsmittel, darunter beispielsweise die Brom- und Chloralkane und -kohlenwasserstoffe wie Tetrachlormethan, Tetrabrommethan, Chloroform, Bromoform, Dichlormethan, Dibrommethan, Dichlorethan und Dibromethan, Ether wie Tetrahydrofuran, Diethylether, Diisopropylether, Methyl-tert.-butylether und Dioxan, Alkohole wie Ethanol, Isopropanol, 2-Butanol, Cyclohexanol, Ethylenglykol, Ketone und substituierte Aromaten wie Toluol oder Xylol. Diese Verbindungen werden im Fall ihrer Anwendung in Mengen von 5 bis 100 Gew.-% bezogen auf die Monomeren eingesetzt.

Bevorzugt werden stark regelnde Verbindungen wie Mercaptane, die nur in geringen Mengen eingesetzt werden müssen. Unter den schwächer regelnden Verbindungen sind solche bevorzugt, die wasserlöslich sind und somit während der Aufarbeitung weitgehend aus dem Polymerisat entfernt werden können. Dies sind beispielsweise Alkohole wie Ethanol, Isopropanol oder 2-Butanol und Ketone wie Aceton oder 2-Butanon.

Die Suspensionspolymerisation wird diskontinuierlich in Rührkesseln, die mit wirksamen Rührern, wie z.B. Blatt-, Anker-, Propeller- oder Impellerrührern, ausgestattet sind, in der Regel unter Inertgas (Stickstoff) und bei Normaldruck durchgeführt. Bei entsprechender Auswahl der Initiatoren ist auch die Polymerisation unter erhöhtem Druck möglich. Die Reaktionswärme wird durch Kühlung der Reaktorwand bei Temperaturen unterhalb des Siedepunktes der Reaktionsmischung oder durch sogenannte Siedekühlung durch Polymerisation unter Rückfluß und Kühlung der Brüden durchgeführt. Die diskontinuierliche Polymerisation kann in zwei Ausführungsformen ablaufen:

1. Batchfahrweise

Hier wird die gesamte Reaktionsmischung bestehend aus Monomeren, Wasser, Schutzkolloid und ggf. weitere Additive vorgelegt, bis zu der gewünschten Polymerisationstemperatur erwärmt und bei dieser Temperatur polymerisiert. Der Initiator kann ganz oder teilweise mit vorgelegt und/oder während der Polymerisation in Substanz oder als Lösung in geeigneten Lösemitteln portionsweise oder kontinuierlich zugesetzt werden.

2. Zulauffahrweise

Hier wird die wässrige Phase, ggf. mit einem Teil der Monomermischung und/oder des Initiators vorgelegt, auf die gewünschte Polymerisationstemperatur erwärmt und die Monomermischung langsam zugeführt. Der Polymerisationsinitiator kann in der Monomermischung gelöst oder getrennt davon in Substanz oder als Lösung zugesetzt werden.

Im Anschluß an die Polymerisations(Zulauf-)zeit von 1 bis 8 Stunden, schließt sich eine Nachpolymerisation, ggf. bei erhöhter Temperatur von 0,5 bis 3 Stunden an, hierbei kann ein weiterer, bei erhöhter Temperatur zerfallender Initiator zudosiert werden. Zur Entfernung von Restmonomeren besteht die Möglichkeit, diese ggf. bei reduziertem Druck abzudestillieren oder durch Einleiten von Wasserdampf auszutreiben. Nach Beendigung der Polymerisation wird das feste, teilchenförmige Polymerisat abfiltriert oder abdekantiert und bei Temperaturen unterhalb des Erweichungspunkt der Polymerisate getrocknet.

Die so erhältlichen pulverförmigen Copolymerisate sind nicht wasserlöslich. Um sie als Schlichtemittel zu verwenden, müssen die im Copolymerisat enthaltenen Carboxylgruppen teilweise oder vollständig neutralisiert werden. Hierfür verwendet man Alkalimetall-, Erdalkalimetall- oder Ammoniumbasen, z.B. Natriumhydroxyd, Natriumcarbonat, Natriumhydrogencarbonat, Natriummetaborat, Natriummetasilikat, Trinatriumphosphat, Magnesiumhydroxid, Magnesiumoxid, Calciumoxid, Calciumhydroxid, Ammoniumcarbonat oder Ammoniumhydrogencarbonat. Es können auch Mischungen verschiedener Basen eingesetzt werden, z.B. verwendet man die Mischungen aus Ammoniak und Natronlauge oder Soda und Natriumhydrogencarbonat. Zum Schlichten von Filamentgarnen neutralisiert man die Suspensionspolymerisate vorzugsweise mit Ammoniak, Aminen wie Diethanolamin oder Mischungen aus Ammoniak und Natronlauge.

Die Neutralisation der Carboxylgruppen der Suspensionspolymerisate erfolgt zweckmäßigerweise dadurch, daß man die pulverförmigen Suspensionspolymerisate mit pulverförmigen Neutralisationsmitteln mischt. Die Suspensionspolymerisate und die Neutralisationsmittel sollten weitgehend wasserfrei sein oder höchstens 10 Gew.-% Wasser enthalten. Die so hergestellten Mischungen aus 2 Pulvern sind unter weitgehendem Ausschluß von Feuchtigkeit, z.B. beim Lagern in geschlossenen Gebinden, stabil. Aus solchen pulverförmigen Mischungen können die Schlichteflotten sehr leicht dadurch hergestellt werden, daß man diese Mischungen unter Rühren in Wasser einträgt und allein oder gemeinsam mit anderen Zuschlagstoffen wie beispielsweise Stärke oder anderen Schlichtemitteln, gegebenenfalls unter Erwärmung rührt, bis man eine homogene Lösung oder eine wäßrige Dispersion erhält.

Man kann jedoch auch das pulverförmige Carboxylgruppen enthaltende Copolymerisat nach der Trocknung ohne weitere Zusätze, vorzugsweise in geschlossenen Gebinden, lagern. Je nach Bedarf kann dieses Copolymerisat mit mehreren zur Herstellung einer Schlichteflotte benötigten Zuschlagstoffen gemischt werden, so daß man ebenfalls ein Pulver erhält, das in Wasser eingetragen wird und dabei die Schlichteflotte bildet. Man kann jedoch auch so vorgehen, daß man das nicht neutralisierte pulverförmige Suspensionspolymerisat in Wasser einträgt und durch Zusatz von Neutralisationsmitteln und gegebenenfalls anderen Zuschlagstoffen die Schlichteflotte herstellt. Die Zugabe von Suspensionscopolymerisat und Base zu dem vorgelegten Wasser kann dabei in der Weise vorgenommen werden, daß man den pH-Wert der wäßrigen Lösung laufend kontrolliert, so daß er sich innerhalb enger Grenzen bewegt, z.B. in dem Bereich von 6 bis 9. Die Carboxylgruppen enthaltenden Copolymerisate und die Neutralisationsmittel werden dabei vorzugsweise in annähernd äquivalenter Menge dosiert. Die Neutralisationsmittel werden, bezogen auf die Carboxylgruppen im Suspensionspolymerisat, in einer Menge von 0,3 bis 1,2, vorzugsweise 0,5 bis 0,9 Äquivalenten eingesetzt.

Sämtliche Zuschlagstoffe, die üblicherweise beim Schlichten mitverwendet werden, können auch bei der erfindungsgemäßen Verwendung eingesetzt werden. Die wichtigsten Zuschlagstoffe sind beispielsweise polymere Naturstoffe, sowie Stärke, modifizierte Stärke oder Cellulosederivate. Wenn man Pulver miteinander mischt, muß lediglich sichergestellt sein, daß keine Verklebung der Mischung auftritt, damit die Rieselfähigkeit der pulverförmigen Mischung nicht nachteilig beeinflußt wird. Unverträglichkeiten der verschiedenen Suspensionspolymerisate miteinander, die häufig zu Lagerinstaöilitäten bei Textilfaserschlichten auf Basis von Polymerlösungen oder -dispersionen führen, sind hier praktisch völlig ohne Bedeutung, weil die Pulver lagerstabil sind und die daraus hergestellten wäßrigen Schlichteflotten nur wenige Tage stabil sein müssen.

Die pulverförmigen Suspensionspolymerisate können zusammen mit anderen Schlichtemitteln im Gewichtsverhältnis 1:0,5 bis 1:5 eingesetzt werden.

Der Polymergehalt der wäßrigen Schlichteflotten beträgt 1 bis 30 Gew.-%. Diese Lösungen eignen sich zum Schlichten von Kettgarnen aller Art, z.B. von Baumwolle-, Polyester/Baumwolle-, Viskose-, Polyester-, Stapelfasergarnen und deren Mischungen sowie Filamentgarnen aus Polyester, Acetat, Viskose und Polyamid.

Die Suspensionspolymerisate haben in der nicht neutralisierten Form K-Werte von 25 bis 80 (gemessen an 1 gew.-%igen Lösungen in Dimethylsulfoxid bei 25°C). Sie zeichnen sich durch eine gute Schlichtewirkung bei gleichzeitig ausreichend hoher Filmhärte und damit geringer Verklebungsneigung der geschlichteten Kettfäden aus. Die Suspensionspolymerisate lassen sich durch einfaches Auswaschen von den Geweben leicht entfernen. Die Suspensionscopolymerisate, die durch das Auswaschen in das Abwasser gelangen, werden in Kläranlagen praktisch vollständig am Klärschlamm absorbiert und können damit praktisch vollständig aus dem Abwasser eliminiert werden.

Die Prozentangaben in den Beispielen sind Gewichtsprozent. Die K-Werte beziehen sich sämtlich auf nicht neutralisierte Suspensionspolymerisate. Sie wurden nach H. Fikentscher, Cellulosechemie, Band 13, 58-64 und 71-74 (1932) bestimmt. Dabei bedeutet $K = k \cdot 10^3$. Die Messungen wurden an 1 gew.-%igen Lösungen der Suspensionspolymerisate in Dimethylsulfoxid bei einer Temperatur von 25°C durchgeführt.

Beispiele

Herstellung der Suspensionspolymerisate

Die Suspensionspolymerisationen werden in einer 3 l fassenden Glasapparatur mit Rührer, sternförmig angeordneten Rührblättern, Stickstoffein- und -auslaß, Rückflußkühler und Zulaufeinrichtungen für Monomere und Initiatorlösungen durchgeführt. Die Temperaturführung erfolgt über ein Temperierbad. Als Wasser wird vollentsalztes Wasser verwendet, das vor Beginn der Polymerisation durch Begasen mit Stickstoff weitgehend von Luftsauerstoff befreit wird.

Copolymerisat 1

In der Polymerisationsapparatur werden 1.000 g Wasser, 6,7 g Methylhydroxypropylcellulose und 39,25 g Isopropanol vorgelegt und mit 1 g Bis(4-t-butylcyclohexyl)peroxidicarbonat versetzt. Bei 80°C werden 333,3 g einer Mischung aus 51 Gew.-% n-Butylacrylat, 21,5 Gew.-% Methylmethacrylat, 7,5 Gew.-% Acrylnitril und 20 Gew.-% Methacrylsäure sowie 0,26 mol-% Bis(4-t-butylcyclohexyl)peroxidicarbonat während einer Zeit von 2 Stunden unter Rühren mit 300 Upm zudosiert. Nach Temperaturerhöhung auf 90°C und Zugabe von weiteren 0,08 mol-% Bis(4-t-butylcyclohexyl)peroxidicarbonat wird eine Stunde nachpolymerisiert, auf Raumtemperatur abgekühlt und das Copolymerisat durch Filtration gewonnen. Nach Trocknung erhält man ein rieselfähiges Polymerpulver mit einem K-Wert von 50,0.

Copolymerisat 2

In der Polymerisationsapparatur werden 1.190 g Wasser, 10,3 g Methylhydroxypropylcellulose und 33,3 ml Isopropanol vorgelegt und mit 1 g t-Butylperpivalat versetzt. Bei 75 bis 78°C werden 333,3 g einer Mischung aus 52,1 Gew.-% n-Butylacrylat, 21,4 Gew.-% Methylmethacrylat, 6,5 Gew.-% Acrylnitril und 20 Gew.-% Methacrylsäure sowie 0,53 mol-% t-Butylperpivalat während einer Zeit von 1 Stunde unter Rühren mit 300 UpM zudosiert. Nach Temperaturerhöhung auf 90°C und Zugabe von weiteren 0,17 mol-% t-Butylperpivalat wird eine Stunde nachpolymerisiert, Restmonomere bei reduziertem Druck abdestilliert, auf Raumtemperatur abgekühlt und das Copolymerisat durch Filtration gewonnen. Nach Trocknung erhält man ein rieselfähiges Polymerpulver mit einem K-Wert von 60,5. Das Polymerisat weist folgende Teilchengrößenverteilung auf:

| < 250 $\mu$m | > 250 $\mu$m < 500 $\mu$m | > 500 $\mu$m < 710 $\mu$m | > 710 $\mu$m < 1000 $\mu$m | > 1000 $\mu$m < 1600 $\mu$m | > 1600 $\mu$m |
|---|---|---|---|---|---|
| 12 Gew-% | 51 Gew.-% | 19 Gew.-% | 10 Gew.-% | 6 Gew.-% | 2 Gew.-% |

Copolymerisat 3

320 g einer Monomerkombination aus 52,3 Gew.-% Methylacrylat, 18,4 Gew.-% Ethylacrylat, 15,5 Gew.-% Acrylnitril und 13,8 Gew.-% Acrylsäure werden wie beim Copolymerisat 1 beschrieben polymerisiert. Im Anschluß an die Nachpolymerisation werden Restmonomere bei reduziertem Druck abdestilliert. Nach Abkühlung, Filtration und Trocknung erhält man ein festes Copolymerisat mit einem K-Wert von 54,1.

Copolymerisat 4

Eine Vorlage aus 810 g Wasser, 200 g einer 5 gew.-%igen Methylcelluloselösung, 26 g Isopropanol und bezogen auf die Monomere 0,175 mol-% 2,2'-Azobis(2,4-dimethylvaleronitril) wird unter Rühren auf 75°C erwärmt. Nach Erreichen dieser Temperatur setzt man während einer Stunde bei einer Innentemperatur von 75 bis 80°C 340 g einer Mischung aus 47,85 Gew.-% n-Butylacrylat, 19,72 Gew.-% Methylmethacrylat, 6,41 Gew.-% Styrol, 24,64 Gew.-% Methacrylsäure und 1,38 Gew.-% 2,2'-Azobis(2,4-dimethylvaleronitril) zu, polymerisiert nach Zugabe von 0,19 mol-% 2,2'-Azobis(2,4-dimethylvaleronitril) eine Stunde bei 85°C nach, kühlt ab und isoliert das Copolymerisat durch Filtration und Trocknung mit einer Ausbeute von 98,6 %. Der K-Wert des pulverförmigen, rieselfähigen Polymerisats beträgt 56,4.

Coplymerisat 5

568 g Wasser, 0,75 Gew.-% bezogen auf Monomere Hydroxyethylcellulose als 5 %ige wässrige Lösung, sowie, jeweils bezogen auf eingesetzte Monomere, 0,12 mol-% Mercaptoethanol, 0,04 mol-% 2,2'Azobis(2,4-dimethylvaleronitril) und 0,03 mol-% 2,2'-Azobis(2-methylbutyronitril) werden vorgelegt, 143 g einer Monomermischung bestehend aus 51,3 Gew.-% n-Butylacrylat, 4,9 Gew.-% Styrol, 21,4 Gew.-% Methacrylsäure und 22,4 Gew.-% Methylmethacrylat unter Rühren darin dispergiert und auf 70°C erwärmt. Weitere 190,3 g dieser Monomermischung werden nach Erreichen der Innentemperatur von 70°C während 3 Stunden zudosiert. Gleichzeitig beginnt die Zugabe von 0,31 mol-% 2,2'-Azobis(2,4-dimethylvaleronitril), gelöst in 15,6 g Aceton, über einen Zeitraum von 3,5 Stunden. Nach Beendigung der Monomerzugabe wird die Innentemperatur auf 90°C erhöht und eine Stunde bei dieser Temperatur nachpolymerisiert. Die Aufarbeitung durch Filtration und Trocknung liefert ein rieselfähiges Pulver mit dem K-Wert von 44,9.

Copolymerisat 6

568 g Wasser, 0,75 Gew.-% bezogen auf Monomere Hydroxyethylcellulose als 5 %ige wässrige Lösung, sowie, jeweils bezogen auf eingesetzte Monomere, 0,20 mol-% Mercaptoethanol, 0,21 mol-% 2,2'Azobis(2,4-dimethylvaleronitril) und 0,03 mol-% 2,2'-Azobis(2-methylbutyronitril) werden vorgelegt, 143 g einer Monomermischung bestehend aus 51,3 Gew.-% n-Butylacrylat, 4,9 Gew.-% Styrol, 21,4 Gew.-% Methacrylsäure und 22,4 Gew.-% Methylmethacrylat unter Rühren darin dispergiert und auf 70°C erwärmt. Weitere 190,3 g dieser Monomermischung werden nach Erreichen der Innentemperatur von 70°C während 3 Stunden zudosiert. Gleichzeitig beginnt die Zugabe von 0,14 mol-% 2,2'-Azobis(2,4-dimethylvaleronitril), gelöst in 15,6 g Aceton, über einen Zeitraum von 3,5 Stunden. Nach Beendigung der Monomerzugabe wird die Innentemperatur auf 90°C erhöht und eine Stunde bei dieser Temperatur nachpolymerisiert. Die Aufarbeitung durch Filtration und Trocknung liefert ein rieselfähiges Pulver mit dem K-Wert von 35,6.

Copolymerisat 7

In 630 ml Wasser werden 3,41 g Hydroxyethylcellulose und 0,18 mol-%, bezogen auf eingesetzte Monomere, Mercaptoethanol sowie 4,8 mmol 2,2'-Azobis(2,4-dimethylvaleronitril) vorgelegt und auf 70°C innerhalb von 30 min erwärmt. Zu der Vorlage dosiert man unter Rühren bei 70°C Reaktionstemperatur innerhalb von 3 Stunden 3,409 mol Monomere bestehend aus 10 Gew.-% Methylmethacrylat, 17 Gew.-% Methacrylsäure, 65 Gew.-% Ethylacrylat und 8 Gew.% Styrol. Nach einer und zwei Stunden Reaktionszeit werden jeweils, bezogen auf eingesetzte Monomere, 1800 ppm und nach drei Stunden 800 ppm 2,2'-Azobis(2,4-dimethylvaleronitril) zugesetzt. Anschließend wird noch eine Stunde bei 90°C nachpolymerisiert, abgekühlt, filtriert und getrocknet. Man erhält in 99 %iger Ausbeute ein Polymerisat in Form kleiner Kugeln mit einem K-Wert von 40,0.

Copolymerisat 8

In 630 ml Wasser werden 3,41 g Hydroxyethylcellulose und 0,18 mol-%, bezogen auf eingesetzte Monomere, Mercaptoethanol vorgelegt und auf 70°C innerhalb von 30 min erwärmt. Zu der gerührten Vorlage dosiert man bei 70°C Reaktionstemperatur innerhalb von 3 Stunden 3,409 mol Monomere bestehend aus 10 Gew.-% Methylmethacrylat, 17 Gew.-% Methacrylsäure, 65 Gew.-% Ethylacrylat und 8 Gew.% Styrol. Außerdem werden 0,31 mol-% 2,2'-Azobis(2,4-dimethylvaleronitril) gelöst in 14 g Aceton im Verlauf von 3,5 Stunden zudosiert. Vier Stunden nach Zulaufbeginn wird die Polymerisation durch Abkühlen beendet. Nach Filtration und Trocknung erhält man ein Copolymerisat mit dem K-Wert 40,4.

Copolymerisate 9 - 15

518 g Wasser und 0,4 g Mercaptoethanol werden mit der in Tabelle 1 angegebenen Menge Schutzkolloid vorgelegt. 332 g einer Monomermischung bestehend aus 46,9 mol-% n-Butylacrylat, 25,1 mol-% Methylmethacrylat, 19,1 mol-% Methacrylsäure und 8,9 mol-% Methylacrylat sowie die in Tabelle 1 angegebenen Initiatoren werden hinzugefügt. Die Mischung wird unter Rühren mit einem Sternrührer bei 300 UpM auf 70°C erwärmt, vier Stunden bei 70 bis 75°C polymerisiert und eine Stunde bei 90 bis 95°C nachpolymerisiert. Während der Polymerisationsreaktion wird im Abstand von 30 min der unter "Initiator-Zugabe" aufgeführte Initiator in acht Portionen zugegeben. Man erhält nach Abkühlen, Filtrieren und Trocknen die in Tabelle 1 angegebene Ausbeute an Copolymerisat.

8

Tabelle 1:

| Copolymerisat Nr. | Schutzkolloid | Einsatzmenge [Gew.-%] | Initiator Vorlage | | | | | Initiator Zugabe | | Ausbeute [%] |
|---|---|---|---|---|---|---|---|---|---|---|
| | | | A [mol%] | B [mol-%] | C [mol-%] | D [mol-%] | E [mol-%] | A [mol-%] | D [mol-%] | |
| 9 | Methylhydroxypropylcellulose | 1,5 | 0,08 | – | 0,08 | – | – | 0,28 | – | 96,1 |
| 10 | Methylhydroxypropylcellulose | 1,5 | – | 0,08 | – | 0,08 | – | – | 0,28 | 98,8 |
| 11 | Methylhydroxypropylcellulose | 2,3 | – | – | – | 0,08 | 0,08 | – | 0,28 | 84,3 |
| 12 | Polyacrylsäure | 3,0 | – | – | – | 0,08 | – | – | 0,28 | 88,6 |
| 13 | Hydroxyethylcellulose | 1,0 | – | – | – | 0,08 | – | – | 0,28 | 95,6 |
| 14 | Polyvinylalkohol | 5,2 | – | – | – | 0,08 | – | – | 0,28 | 93,9 |
| 15 | Hydroxyethylcellulose Methylhydroxypropylcellulose | 0,5 0,5 | 0,08 | – | – | – | – | 0,28 | – | 99,3 |

Initiator A:  2,2'-Azobis(2,4-dimethylvaleronitril)
Initiator B:  2,2'-Azobis(2-methylbutyronitril)
Initiator C:  Dimethyl-2,2'-azobis(2-methylpropionat)
Initiator D:  t-Butylperpivalat
Initiator E:  t-Butylperisooctanoat
Alle Angaben in mol-% und Gew.-% beziehen sich auf die eingesetzten Monomere.

Coplymerisate 16 - 21

Eine Vorlage aus 495 g Wasser, 5 g Methylhydroxypropylcellulose und 0,2 mol-%, bezogen auf eingesetzte Monomere, Mercaptoethanol werden mit 166,6 g einer Monomermischung aus 55 Gew.-% n-Butylacrylat, 23 Gew.-% Methylmethacrylat, 15 Gew.-% Methacrylsäure und 7 Gew.-% des in Tabelle 2 aufgeführten Monomeren gemischt, mit 0,5 mol-% t-Butylperpivalat versetzt und bei 70 bis 75°C 4 Stunden

polymerisiert. Während dieser Zeit dosiert man 0,29 mol-% t-Butylperpivalat gelöst in 45 g Essigsäureethylester (Copolymerisat 21: Initiator ohne Lösemittel) zu. Nach Abdestillieren von Lösemitteln und Restmonomeren, Abkühlen, Filtrieren und Trocknen erhält man die in Tabelle 2 angegebenen Ausbeuten an Copolymerisaten mit den dort aufgeführten K-Werten.

Tabelle 2

| Copolymer Nr. | Monomer | Ausbeute | K-Wert |
|---|---|---|---|
| 16 | Acrylnitril | 85,4 | 50,1 |
| 17 | Methylacrylat | 94,8 | 55,3 |
| 18 | t-Butylacrylat | 96,1 | 44,5 |
| 19 | Vinylpropionat | 94,2 | 52,5 |
| 20 | Methylmethacrylat | 90,0 | 50,9 |
| 21 | Vinyacetat | 91,2 | 49,0 |

Herstellung der Schlichteflotte und Schlichtung der Garne

Die getrockneten Suspensionspolymerisate wurden mit 0,9 mol Soda pro mol Carboxylgruppen im Polymer versetzt. Für die Prüfung der Schlichteeigenschaften des reinen Polymerisats wird diese Pulvermischung unter Rühren in Wasser eingetragen und innerhalb von 30 bis 60 min bei 90°C gelöst. Für die Prüfung auf Stapelfasergarnen aus Polyester/Baumwolle wird ein Feststoffgehalt von 14 % eingestellt, bei Prüfung auf Baumwolle beträgt der Feststoffgehalt 8 %.

Zur Bestimmung der Schlichtewirkung der Suspensionspolymerisate in Mischung mit Stärke (Hydroxypropyl-Kartoffelstärke) werden die Polymerisate zunächst mit 0,9 mol Soda pro mol Carboxylgruppen im Polymer versetzt. Zu einem Gewichtsteil dieser Mischung gibt man zwei Gewichtsteile Stärke. Aus dem so erhaltenen Pulver wird eine 11 %ige wässrige Flotte hergestellt, indem man das Pulver unter Rühren in Wasser einträgt und 30 bis 60 Minuten bei 90°C rührt. Mit dieser Schlichteflotte werden Garne aus Polyester/Baumwolle und/oder Baumwolle geschlichtet.

Die Schlichtung wird auf einer Laborschlichtemaschine (DE-B-2 714 897) bei Raumtemperatur durchgeführt. Dabei wird die in den Beispielen angegebene Schlichteauflage eingestellt. Anschließend werden die geschlichteten Garne für die Dauer von 24 Stunden bei 68 % relativer Feuchtigkeit und 20°C klimatisiert.

Bestimmung der Schlichtewirkung

Die Prüfung der Schlichtewirkung erfolgt auf dem Scheuergerät nach Kenk. Dabei werden 20 Garne wiederholt mechanisch beansprucht. Als Kriterium für die Schlichtewirkung dienen die Scheuerzahl 5, abgekürzt SZ 5, und die Scheuerzahl 20, abgekürzt SZ 20. Die beiden Werte stehen für die Anzahl der Scheuerbeanspruchungen nach denen 5 bzw. 20 Fäden gerissen sind. Hohe Scheuerzahlen stehen für gute Schlichteeffekte.

Die Beispiele zeigen die Ergebnisse der Prüfung an den präparierten Garnen. Da die Schlichteergebnisse beispielsweise durch Klimabedingungen bei der Schlichtung, Lagerung und Auswertung, durch Garnqualität und -charge oder durch die Schlichteauflage stark beeinflußt werden, sind die anwendungstechnischen Prüfungen der pulverförmigen Schlichtemittel in Serien zusammengefaßt. Innerhalb einer Serie werden alle genannten Parameter weitgehend konstant gehalten. Als Vergleich zu marktüblichen Flüssigschlichten auf Acrylatbasis wird Schlichte CE in jeder Serie mitgeprüft. Schlichte CE ist eine 25 %ige wäßrige Lösung eines Polyacrylats. Die dafür gefundenen Absolutwerte schwanken von Serie zu Serie, Die Beurteilung der Relation zu diesem Standard ist allerdings innerhalb einer Serie möglich.

Beispiele 1 bis 4

Geschlichtet werden Stapelfasergarne aus Polyester/Baumwolle Nm 70/1 mit einer Schlichteauflage von 15 %. Die Ergebnisse sind in Tabelle 1 angegeben.

Tabelle 1

| Beispiel | Schlichtemittel | Scheuerzahl 5 | Scheuerzahl 20 |
|---|---|---|---|
| 1 | Copolymerisat 5 | 1174 | 2087 |
| 2 | Copolymerisat 6 | 1375 | 2382 |
| 3 | Copolymerisat 7 | 1145 | 1776 |
| 4 | Copolymerisat 8 | 1199 | 1696 |
| Vergleichbeispiel 1 | Schlichte CE | 883 | 1533 |

Beispiele 5 bis 12

Geschlichtet werden Stapelfasergarne aus Polyester/Baumwolle (PES/BW) Nm69/1 mit einer Schlichteauflage von 14,4 % und aus Baumwolle (BW) Nm 70/1 mit einer Schlichteauflage von 10,6 %. Die Ergebnisse sind in Tabelle 2 angegeben.

Tabelle 2

| Beispiel | Schlichtemittel | PES/BW SZ 5 | PES/BW SZ 20 | BW SZ 5 | BW SZ 20 |
|---|---|---|---|---|---|
| 5 | Copolymerisat 2 | 2840 | 3625 | 715 | 895 |
| 6 | Copolymerisat 9 | 2187 | 2740 | 232 | 349 |
| 7 | Copolymerisat 10 | 2027 | 3353 | 245 | 371 |
| 8 | Copolymerisat 12 | 1701 | 2874 | 225 | 286 |
| 9 | Copolymerisat 13 | 2222 | 3273 | 193 | 231 |
| 10 | Copolymerisat 14 | 1647 | 2301 | 522 | 858 |
| 11 | Copolymerisat 15 | 1807 | 2241 | 203 | 263 |
| 12 | Copolymerisat 16 | 1940 | 3379 | 233 | 303 |
| Vergleichsbeispiel 2 | Schlichte CE | 1398 | 2148 | 167 | 229 |

Beispiele 13 bis 18

Die Schlichteprüfung wird mit einer Schlichteauflage von 15 % auf Polyester/Baumwolle-Stapelfasergarn und 10,6 auf Baumwollgarn durchgeführt. Die Ergebnisse sind in Tabelle 3 zusammengestellt.

Tabelle 3

| Beispiel | Schlichtemittel | PES/BW SZ 5 | PES/BW SZ 20 | BW SZ 5 | BW SZ 20 |
|---|---|---|---|---|---|
| 13 | Copolymerisat 16 | 1959 | 2686 | 543 | 716 |
| 14 | Copolymerisat 17 | 1921 | 2437 | 216 | 278 |
| 15 | Copolymerisat 18 | 1625 | 2445 | 170 | 219 |
| 16 | Copolymerisat 19 | 1365 | 2070 | 174 | 212 |
| 17 | Copolymerisat 20 | 740 | 1645 | 161 | 205 |
| 18 | Copolymerisat 21 | 1320 | 1749 | 486 | 644 |
| Vergleichsbeispiel 3 | Schlichte CE | 847 | 1460 | 125 | 161 |
| Vergleichsbeispiel 4 | Polyvinylalkohol (Mowiol 8 - 88) | 1109 | 1708 | 552 | 705 |
| Vergleichsbeispiel 5 | Polyvinylalkohol (Mowiol 26 - 88) | 1057 | 1747 | 482 | 730 |

Beispiel 19

Die Prüfung der Schlichteeigenschaften erfolgt mit erhöhter Schlichteauflage von 18,2 % auf Polyester/Baumwollgarn und 14,4 % auf Baumwollgarn. Die Ergebnisse sind in Tabelle 4 angegeben.

Tabelle 4

| Beispiel | Schlichtemittel | PES/BW SZ 5 | PES/BW SZ 20 | BW SZ 5 | BW SZ 20 |
|---|---|---|---|---|---|
| 19 | Copolymerisat 4 | 2009 | 2979 | 577 | 772 |
| Vergleichsbeispiel 6 | Schlichte CE | 792 | 1474 | 500 | 597 |

Beispiele 20 und 21

Zur Prüfung der Schlichtewirkung der Mischung aus Suspensionscopolymerisat und Stärke wird wie oben beschrieben verfahren. Die Schlichteauflage von 18,5 % auf Polyester/Baumwolle-Stapelfasergarn und 14,4 % auf Baumwollgarn bezieht sich auf die Mischung aus Stärke und Copolymerisat. Im Vergleichsbeispiel 7 wird das pulverförmige Copolymerisat durch die, bezogen auf den Polymergehalt der Mischung, gleiche Menge Schlichte CE ersetzt. Die Ergebnisse sind in Tabelle 5 wiedergegeben.

Tabelle 5

| Beispiel | Schlichtemittel Stärke +... | PES/BW SZ 5 | PES/BW SZ 20 | BW SZ 5 | BW SZ 20 |
|---|---|---|---|---|---|
| 20 | Copolymerisat 1 | 1649 | 2651 | - - | -- |
| 21 | Copolymerisat 3 | 824 | 1482 | 529 | 854 |
| Vergleichsbeispiel 7 | Schlichte CE | 811 | 1406 | 518 | 666 |

Beispiel 22

Neben der Bestimmung der Scheuerzahlen kann die Prüfung der Schlichtewirkung durch die Simulation der Belastung während des Webvorganges auf dem Reutlinger Webtester erfolgen, indem die geschlichteten Garne unter einer bestimmten Spannung mittels Metallstiften wiederholt mechanisch beansprucht

12

werden. Die Anzahl dieser Beanspruchungen (Tourenzahl), bei der eine bestimmte Schädigung des Garns festzustellen ist, stellt ein Maß für die Qualität des Schlichtemittels dar.

Als Kriterien für die Schlichtewirkung dienen

a) Die Pilling-Werte (Pilling), d.h. die Tourenzahl, bei dem am sechsten Garn die Bildung eines Knötchens zu beobachten ist und

b) die Pseudo-Kettfadenbruchwerte (PKF), d.h. die Tourenzahl, bei der das sechste Garn erschlafft.

Die Ergebnisse sind in Tabelle 6 angegeben. Hohe Pilling- und Pseudo-Kettfadenbruchwerte bedeuten eine gute Schlichtewirkung.

Tabelle 6

| Beispiel | Schlichtemittel | PES/BW Pilling | PES/BW PKF | BW Pilling | BW PKF |
|---|---|---|---|---|---|
| 22 | Copolymerisat 15 | 1340 | 2349 | 295 | 488 |
| Vergleichsbeispiel 8 | Schlichte CE | 695 | 1711 | 205 | 313 |

Beispiel 23

Die biologische Eliminierbarkeit wird im modifizierten Zahn/Wellens-Test (OECD 302 B) geprüft. In Tabelle 7 sind die Eliminierungsraten nach 1, 7 und 28 Tagen angegeben.

Tabelle 7

| Beispiel | Schlichtemittel | Eliminierung 1 Tag [%] | Eliminierung 7 Tage [%] | Eliminierung 28 Tage [%] |
|---|---|---|---|---|
| 23 | Copolymerisat 2 | 87 | 93 | 99 |
| Vergleichsbeispiel 9 | Schlichte CE | 60 | 87 | 96 |
| Vergleichsbeispiel 10 | Polyvinylalkohol Mowiol 26 - 88 | 4 | 26 | 79 |

**Patentansprüche**

1.  Verwendung von Suspensionspolymerisaten aus
    a) 40 bis 90 Gew.-% Acrylsäure- und/oder Methacrylsäureestern,
    b) 10 bis 35 Gew.-% monoethylenisch ungesättigten $C_3$- bis $C_5$-Carbonsäuren, Halbestern von Maleinsäure, Fumarsäure oder Itaconsäure mit einwertigen $C_1$- bis $C_4$-Alkoholen oder Mischungen dieser Monomeren mit bis zu 55 Gew.-% anderen wasserlöslichen Monomeren und
    c) 0 bis 30 Gew.-% anderen wasserunlöslichen Monomeren
    in wäßriger Lösung oder Dispersion in zumindest partiell mit Alkalimetall- und/oder Erdalkalimetallbasen oder Ammoniumbasen neutralisierter Form als Schlichtemittel für Textilfasern.

2.  Verwendung nach Anspruch 1, dadurch gekennzeichnet, daß man zur Herstellung der Schlichteflotten pulverförmige Suspensionspolymerisate mit pulverförmigen Alkalimetall- und/oder Erdalkalimetallbasen oder pulverförmigen Ammoniumbasen mischt und die Mischung anschließend in Wasser löst oder dispergiert.

3.  Verwendung nach Anspruch 1, dadurch gekennzeichnet, daß man zur Herstellung der Schlichteflotten pulverförmige Suspensionspolymerisate mit Alkalimetall- und/oder Erdalkalimetallbasen oder Ammoniumbasen in Gegenwart von Wasser zumindest partiell neutralisiert.

4.  Verwendung nach Anspruch 1, 2 oder 3, dadurch gekennzeichnet, daß man die pulverförmigen Suspensionspolymerisate zusammen mit anderen Schlichtemitteln im Gewichtsverhältnis 1:0,5 bis 1:5 einsetzt.

**Europäisches Patentamt**

# EUROPÄISCHER RECHERCHENBERICHT

Nummer der Anmeldung

EP    93 10 5738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | EP-A-0 450 437 (BADISCHE ANILIN- & SODA-FABRIK AG.) <br> * Seite 2, Zeile 56 - Seite 3, Zeile 1; Ansprüche * <br> --- | 1 | D06M15/263 <br> D06M15/285 <br> D06M15/327 <br> D06M15/233 |
| D,X | US-A-3 740 367 (WINKELBLECH) <br> * das ganze Dokument * <br> --- | 1 | |
| X | US-A-4 316 929 (MCINTIRE ET AL.) <br> * das ganze Dokument * <br> --- | 1 | |
| X | FR-A-2 122 422 (COLLOIDS INC.) <br> * Seite 2, Zeile 6 - Zeile 36; Ansprüche 1,3,4 * <br> --- | 1 | |
| X | US-A-4 189 416 (WILLIAMS) <br> * das ganze Dokument * <br> --- | 1-4 | |
| A | DE-A-2 441 277 (KANEBO LTD.) <br> * Ansprüche * <br> --- | 1-4 | **RECHERCHIERTE SACHGEBIETE (Int. Cl.5)** |
| A | EP-A-0 311 905 (HENKEL KOMMANDITGESELLSCHAFT AUF AKTIEN) <br> * das ganze Dokument * <br> ----- | 1-4 | D06M <br> C10M |

Der vorliegende Recherchenbericht wurde für alle Patentansprüche erstellt

| Recherchenort | Abschlußdatum der Recherche | Prüfer |
|---|---|---|
| DEN HAAG | 19 JULI 1993 | BLAS V. |